# EUROPÄISCHE PATENTSCHRIFT

(11) **EP 1 620 332 B1**
(45) Veröffentlichungstag und Bekanntmachung des Hinweises auf die Patenterteilung: **10.10.2012**
(21) Anmeldenummer: 04727202.6
(22) Anmeldetag: 14.04.2004
(51) Int. Cl.: B65G 1/04

(54) **ANORDNUNG UND VERFAHREN ZUR BEWIRTSCHAFTUNG EINES WARENLAGERS**
DEVICE AND METHOD FOR RUNNING A WAREHOUSE
DISPOSITIF ET PROCEDE D'EXPLOITATION D'UN ENTREPOT

(30) Priorität: 14.04.2003 EP 03405259
(43) Veröffentlichungstag der Anmeldung: 01.02.2006
(73) Patentinhaber: Güdel Group AG, 4900 Langenthal (CH)
(72) Erfinder: WIRZ, Herbert, CH-4528 Zuchwil (CH); GÜDEL, Rudolf, CH-4500 Solothurn (CH); ZULAUF, Walter, CH-4937 Ursenbach (CH)
(74) Vertreter: Roshardt, Werner Alfred
(86) Internationale Anmeldenummer: PCT/CH2004/000228
(87) Internationale Veröffentlichungsnummer: WO 2004/089787

(56) Entgegenhaltungen:
- EP-A- 0 288 426
- EP-A- 0 767 113
- DE-A- 3 919 932
- US-A- 4 678 390
- US-A- 4 883 401
- US-A- 5 032 053
- US-A- 6 061 607

## Beschreibung

### Technisches Gebiet

Die Erfindung betrifft eine Anordnung zur Bewirtschaftung eines Warenlagers, bei welchem in einem Lagerbereich Gegenstände in mehreren Stapeln gelagert sind, mit einer Sammelvorrichtung, die über den Lagerbereich beliebig verfahrbar ist, mit einem an der Sammelvorrichtung angeordneten Zwischenspeicher zur Aufnahme von aus dem Lagerbereich aufzunehmenden Gegenständen, wobei der Zwischenspeicher in getrennten Aufnahmeschritten aus verschiedenen Stapeln sukzessive füllbar ist, und mit einer an der Sammelvorrichtung angeordneten Greifvorrichtung zum Anheben eines oder mehrerer Gegenstände aus einem der Stapel, wobei die Greifvorrichtung vertikal verfahrbar ist. Die Erfindung betrifft ferner ein Verfahren zur Bewirtschaftung eines Warenlagers, insbesondere mit der erfindungsgemässen Anordnung.

### Stand der Technik

Die Bewirtschaftung von Warenlagern erfolgt heute oft automatisiert. Dies ermöglicht gegenüber der manuellen Bewirtschaftung ein schnelleres und rationelleres Zusammenstellen von Warenbestellungen, die z.B. an Kunden ausgeliefert werden sollen. Bekannt sind Hochregallager, in welchen eine Vielzahl von unterschiedlichen Gegenständen gelagert und mittels Robotern kommissioniert werden können. Solche Lager sind aufgrund der Regalkonstruktion aber teuer und erfordern Roboter mit einer aufwändigen Konstruktion. Die Lagerung von Gegenständen, die stapelbar sind oder sich gut in stapelbare Behältnisse, z.B. Kisten, verpacken oder füllen lassen, erfolgt deshalb mit Vorteil in mehreren Stapeln, die in einem Lagerbereich angeordnet sind.

Die US 2,701,065 (C. A. Bertel) zeigt eine Vorrichtung zum Lagern und Handhaben von stapelbaren Behältern. Diese sieht eine oberhalb des Lagerbereichs verfahrbare erste Hebeeinheit vor, welche einen Teil eines Stapels anheben und halten kann, sowie eine zweite Hebeeinheit, welche jenen Behälter anheben und halten kann, welcher sich unmittelbar unterhalb des angehobenen Stapelteils befindet. Soll nun ein Behälter aus einem Stapel an einem bestimmten Ort auf den Boden abgesetzt werden, z.B. um ihn dort zu entladen, so werden die allfällig auf ihm gelagerten weiteren Behälter von der ersten Hebeeinheit abgehoben und der Behälter wird von der zweiten Hebeeinheit erfasst, an den bestimmten Ort verschoben und dort abgesetzt.

Die DE 26 29 718 (Fried. Krupp GmbH) beschreibt ein Verfahren und eine Einrichtung zum Umschlagen von stapelbaren Behältern, welches ein verfahrbares Hebegerät vorsieht, das in der Lage ist, alle oder alle bis auf einen Behälter eines Stapels über die Stapelhöhe hinaus anzuheben. Werden alle Behälter eines Stapels angehoben, so kann darunter ein zusätzlicher Behälter zugeführt werden, wird der unterste Behälter des Stapels nicht angehoben, so kann er nach Anheben des Reststapels weggefahren werden. Das Hebegerät wird auf Schienen verfahren, welche unterhalb oder oberhalb der Stapelhöhe angeordnet sein können.

Die US 6,061,607 (St. Onge Company) zeigt ein System für die automatisierte Lagerverwaltung, insbesondere für Lagerbestände, welche sowohl oft als auch selten nachgefragte Artikel umfassen, Das System umfasst mehrere kistenförmige Behälter, welche in eine Vielzahl von oben offenen, vertikalen Zellen unterteilt sind, wobei in jeder dieser Zellen ein Stapel von Artikeln (z. B. CDs) gelagert ist. Die Zellen sind an den Stapelquerschnitt angepasst, 50 dass die vertikale Ausrichtung der Stapel erhalten bleibt. Die selten nachgefragten Artikel werden mittels eines Portalgreifers einzeln aus den Zellen auf Förderbänder transportiert. Die oft nachgefragten Artikel sind in Dispensem gelagert, welche oberhalb der Förderbänder angeordnet sind, so dass diese Artikel sehr schnell auf das Förderband gegeben werden können. Das Nachfüllen erfolgt automatisch aus angrenzend an die Dispenser angeordneten kistenförmigen Behältern. Dazu weist das System über ein Portal verfahrbare Fördervorrichtungen auf. Diese umfassen einen in die Zellen der Behälter absenkbaren Greifer, welcher jochartig aufgebaut ist mit zwei nach unten ragenden Armen. Entlang der Innenseite der Arme erstrecken sich pneumatische Druckplatten, welche einen Stapel von Artikeln in einer Zelle greifen und ihn festhalten können.

Nachteilig bei den genannten Verfahren und Vorrichtungen ist ihre mangelnde Flexibilität. Die aufgenommenen Stapel oder Teilstapel müssen als Ganzes transportiert werden, sie können nicht mit Gegenständen aus weiteren Stapeln ergänzt werden. Dies hat beim Zusammenstellen von Warenbestellungen einen grossen Zeitverlust zur Folge.

Die EP 0 767 113 (Cimcorp) gibt ein System und ein Verfahren an, bei welchem ein Roboter über die Arbeitsfläche bewegbar ist und eine vertikal bewegbare Greifvorrichtung umfasst. Diese weist eine turmähnliche Lastaufnahmevorrichtung auf, die mehrere gestapelte Gegenstände umschliessen kann, und an ihrem unteren Ende mit Greifmitteln versehen ist. Soll nun ein Teilstapel aufgenommen werden, so wird die turmähnliche Lastaufnahmevorrichtung über den Stapel positioniert und vertikal nach unten verfahren, bis die Greifmittel den untersten anzuhebenden Gegenstand fassen können. Auf diese Weise kann nun in der Lastaufnahmevorrichtung ein Stapel von Gegenständen aus mehreren Stapeln zusammengestellt werden.

Nachteilig bei diesem System und Verfahren ist aber, dass zwischen den einzelnen Stapeln allseitig Freiräume verbleiben müssen, damit die Greifvorrichtung mit der turmähnlichen Lastaufnahmevorrichtung beim Absenken nicht mit angrenzenden Stapeln kollidiert. Dies hat eine schlechte Nutzung des verfügbaren Lagerraums zur Folge.

### Darstellung der Erfindung

Aufgabe der Erfindung ist es, eine dem eingangs genannten technischen Gebiet zugehörende Anordnung und ein Verfahren zu schaffen, welche eine verbesserte Nutzung des verfügbaren Lagerraums und eine erhöhte Effizienz erlauben.

Die Lösung der Aufgabe ist durch die Merkmale des Anspruchs 1 definiert. Gemäss der Erfindung ist die Greifvorrichtung zum Anheben eines oder mehrerer Gegenstände aus einem der Stapel im Wesentlichen durch zwei einander gegenüberliegende Schwerter gebildet, welche gegenüber dem Zwischenspeicher vertikal verfahrbar sind.

Die Schwerter erstrecken sich im Wesentlichen jeweils entlang einer Seite des aufzunehmenden Gegenstands und ragen nicht über diese Seite hinaus.

Dies hat den Vorteil, dass zur Aufnahme von Gegenständen (z.B. Kisten) eines Stapels lediglich die Schwerter soweit nach unten verfahren werden müssen, dass sie zwischen die Stapel hinein greifen. Die Schwerter erfordern nur auf zwei gegenüberliegenden Seiten des anzuhebenden Stapels einen Freiraum. Entlang der anderen zwei gegenüberliegenden Seiten greift die Vorrichtung nicht in den Stapelbereich ein. Dadurch wird die Ausnutzung des Lagerraums beträchtlich verbessert. Die Schwerter erlauben überdies ein Aufgreifen der Gegenstände sowohl entlang deren Hauptrichtung als auch senkrecht dazu. Je nach Dimensionen und Aufteilung des Lagerraums lässt sich die Ausnutzung des verfügbaren Raums durch optimale Wahl der Ausrichtung noch weiter verbessern.

Gegenüber Lösungen, bei welchen der Zwischenspeicher zusammen mit der Greifvorrichtung vollständig abgesenkt werden muss, wird die bewegte Masse reduziert und dadurch der Energieverbrauch gesenkt. Zusätzlich wird durch die reduzierte Trägheit der bewegten Elemente die Dynamik der Anordnung verbessert, d.h. Bewegungen der Greifvorrichtung können schneller erfolgen, insbesondere wenn die Greifvorrichtung leer ist. Mit Vorteil werden also alle aufgenommenen Gebinde in den Zwischenspeicher verschoben und zusätzliche Gebinde mit leerer Greifvorrichtung erfasst.

Das Lager kann mehrere Lagerbereiche umfassen, die jeweils eine bestimmte Warengruppe beinhalten oder durch eine einzelne Sammelvorrichtung abgedeckt werden- Gleichermassen können mehrere Sammelvorrichtungen in demselben Lagerbereich arbeiten.

Die Sammelvorrichtung wird bevorzugt durch einen Portalroboter über den Lagerbereich verfahren, es können aber auch z.B. Knickarmroboter vorgesehen werden oder andere bekannte Anordnungen, die die Sammelvorrichtung oberhalb des Lagerbereichs in eine beliebige Position verfahren können.

Mit Vorteil ist die Sammelvorrichtung in zwei einander gegenüberstehende Hälften aufgeteilt, die relativ zueinander verfahrbar sind. Diese Aufteilung wird durch die erfindungsgemässe Konstruktion der Greifvorrichtung mit zwei Schwertern begünstigt. Sie ermöglicht einerseits die einfache und schnelle Anpassung an verschiedene Gebindegrössen. Der Abstand der beiden Hälften und damit der Abstand der Schwerter sowie die Grösse des Zwischenspeichers können z.B. automatisiert den gelagerten Gegenständen angepasst werden. Dies bietet einen zeitlichen Vorteil, wenn die Gebindegrösse ändert und ermöglicht auch die Verarbeitung mehrerer Gebindegrössen in demselben Lagerbereich durch dieselbe Sammelvorrichtung. Andererseits können zwei relativ zueinander verfahrbare Hälften dazu dienen, den anzuhebenden Stapelteil in der Greifvorrichtung und/oder den Stapelteil im Zwischenspeicher zu halten. Dazu werden die einander gegenüberstehenden Hälften gegeneinander gefahren, bis die Schwerter und/oder Hälften des Zwischenspeichers den entsprechenden Stapelteil form- oder kraftschlüssig halten. Dadurch wird die Anzahl benötigter Bauelemente und damit die Komplexität der Anordnung reduziert.

Die Hälften der Sammelvorrichtung werden insbesondere mittels pneumatischer Zylinder oder servogesteuerter Achsen relativ zueinander verfahren.

Vorzugsweise ist der Zwischenspeicher im Wesentlichen durch zwei einander gegenüberliegende Seitenträger gebildet. Dies vermindert einerseits die zu bewegende Masse der Sammelvorrichtung und ist dadurch energetisch vorteilhaft. Andererseits wird die einfache Anpassbarkeit der Sammeleinheit an verschiedene Gebindegrössen weiter verbessert.

Beispielsweise kann bereits durch ein relatives Verfahren der beiden Seitenträger zueinander die Grösse des Zwischenspeichers an eine neue Gebindegrösse angepasst werden. Weil die Gegenstände nur auf zwei ihrer Seiten gehalten werden, ist ihre Dimension parallel zu diesen Seiten nicht kritisch. Der Zwischenspeicher kann ohne Anpassung oder sogar in demselben Arbeitsgang Gegenstände aufnehmen, welche in dieser Richtung eine unterschiedliche Ausdehnung aufweisen.

Wahlweise kann der Zwischenspeicher in bekannter Weise die gespeicherten Gegenstände kasten- oder rahmenartig allseitig umschliessen, so dass sie dadurch gegen Herausrutschen oder Umkippen gesichert werden. Falls der Zwischenspeicher zur Aufnahme der Gegenstände nicht unter die Stapelhöhe verfahren werden muss, führt dies nicht zu Kollisionen mit angrenzenden Stapeln, und es werden keine zusätzlichen Abstände zwischen den Stapeln benötigt.

Mit Vorteil sind die Schwerter der Greifvorrichtung in den Seitenträgern des Zwischenspeichers vertikal verfahrbar gelagert.

Die Schwerter und die Seitenträger des Zwischenspeichers können so angeordnet sein, dass die vertikalen Ebenen, die durch sie gebildet werden, einen Raum mit einem im Wesentlichen rechteckigen Querschnitt einschliessen. Dieser Raum ist in seinen Dimensionen den aufzunehmenden Gegenständen angepasst, welche in diesem Fall mit Vorteil ebenfalls einen im Wesentlichen rechteckigen Querschnitt aufweisen. Die Gegenstände im Zwischenspeicher werden also auf zwei ihrer Seiten durch die Schwerter und auf den anderen beiden Seiten durch die Seitenträger gesichert und somit am horizontalen Rutschen oder Kippen gehindert. Falls die untere Begrenzung des Zwischenspeichers bei der Aufnahme der Gegenstände nicht unter die Stapelhöhe verfahren wird, ergibt sich auch in dieser Ausführung eine optimale Ausnützung des Lagerraums, indem nur für die beiden Schwerter ein gewisser Abstand zwischen angrenzenden Stapeln vorgesehen werden muss.

Falls der Zwischenspeicher im Wesentlichen durch zwei Seitenträger gebildet wird, sind in diesem Fall die Schwerter mit Vorteil einseitig über Winkelelemente mit der Lagerung in den Seitenträgern verbunden.

Um Gegenstände beim Anheben oder Absenken zu halten, umfassen die Schwerter auf ihren Innenseiten, d.h. auf ihren einander zugewandten Seiten, die die Gegenstände kontaktieren, vorzugsweise Halteelemente. Um die angehobenen oder abgesenkten Gegenstände gegen Rutschen oder Kippen zu sichern, werden auf der Innenseite der Schwerter vorzugsweise Sicherungselemente angeordnet. Die Gegenstände können dabei jeweils durch Kraft- und/oder Formschluss gehalten bzw. gesichert werden. Die Halte- und Sicherungselemente können zudem passiv, d.h. gegenüber den Schwertern unbeweglich, oder aktiv, d.h. bewegbar, ausgebildet sein.

Als kraftschlüssige Halte- und Sicherungselemente können insbesondere (aktive) Druckplatten vorgesehen werden, welche mit einer gewissen Anpresskraft auf zwei gegenüberliegende Seitenwände des Gegenstands wirken und ihn so einerseits halten und andererseits sowohl ein Rutschen parallel zu den Schwertern als auch ein Kippen in dieser Ebene verhindern. Solche Druckplatten werden mit Vorteil pneumatisch betätigt. Die gleiche Funktion können formschlüssige Halteelemente erfüllen. Diese wirken mit der äusseren Form der Gegenstände zusammen. Entweder werden bei entsprechenden Gegenständen ohnehin vorgesehene Ausnehmungen, Ausbuchtungen oder Kanten ausgenutzt oder die Gegenstände (z.B. Kisten) werden gezielt mit entsprechenden Elementen versehen.

Falls z.B. übliche Kisten mit im Wesentlichen rechteckigem Querschnitt, aber abgerundeten Ecken gestapelt werden, können die Rundungen für die Sicherung der Kisten beim Anheben ausgenutzt werden, indem die Halteelemente der Schwerter entsprechende (passive) Profile aufweisen, die sich nicht oder nur sehr geringfügig über die seitliche Ausdehnung der Kisten erstrecken und mit den Rundungen zusammenwirken. Wahlweise können die Gegenstände auf ihren den Schwertern zugewandten Seiten Ausnehmungen, z.B. vertikale Rillen aufweisen, in die ein entsprechendes, entlang der Schwerter angeordnetes Profil eingreift.

Form- und kraftschlüssige Sicherungs- und Halteelemente können kombiniert werden. Die Kisten können z.B. auf ihrer Unterseite durch am unteren Ende der Schwerter angeordnete, ausfahrbare Finger oder Klinken formschlüssig gehalten werden, während sie durch an der Innenseite der Schwerter angeordnete Druckplatten auf ihren Seitenflächen kraftschlüssig gesichert werden.

Vorzugsweise ist der Zwischenspeicher während der Aufnahme der Gegenstände ortsfest oberhalb des Lagerbereichs angeordnet. Zur Aufnahme werden in diesem Fall lediglich die Schwerter vertikal nach unten verfahren. Weil der Zwischenspeicher und allfällig darin gehaltene Gegenstände zur Aufnahme weiterer Gegenstände vertikal nicht bewegt werden, sind die bewegte Masse und dadurch der Energieverbrauch minimiert.

Wahlweise kann der Zwischenspeicher aber auch bei jedem Aufnahmevorgang zusammen mit der Greifvorrichtung zumindest teilweise nach unten verfahren werden und allfällig darin gespeicherte Gegenstände kurzzeitig auf den Stapel, von welchem weitere Gegenstände abgehoben werden sollen, absetzen. Dabei wird mit Vorteil darauf geachtet, dass die seitliche Umrandung des Zwischenspeichers - zumindest in einer Richtung - möglichst schmal ist, so dass der Lagerraum gut ausgenützt werden kann. Vorzugsweise wird in diesem Fall also ein Zwischenspeicher gewählt, welcher im Wesentlichen durch zwei einander gegenüberliegende Seitenträger gebildet ist.

Auch wenn der Zwischenspeicher zur Aufnahme von Gegenständen nicht verfahren werden muss, kann es von Vorteil sein, wenn der Zwischenspeicher vertikal verfahrbar ist. So kann er nämlich laufend, abhängig vom aktuellen Lagerbestand, auf eine minimale Höhe eingestellt werden, die gerade ausreicht, die Sammelvorrichtung ohne Kollision mit gelagerten Stapeln über den gesamten Lagerbereich zu verfahren. Aufgrund des minimierten Hebewegs kann Energie und Zeit gespart werden.

Zur Stabilisierung des im Zwischenspeicher gespeicherten Stapels kann der Zwischenspeicher an seinem oberen Ende ein vertikal verfahrbares Element umfassen, welches auf den obersten gespeicherten Gegenstand eine Kraft vertikal nach unten ausübt. Zusammen mit der Haltekraft, die von unten auf den untersten gespeicherten Gegenstand wirkt, verhindert dies sowohl das Rutschen einzelner Gegenstände als auch das Kippen des gespeicherten Stapels oder eines Teils davon. Das Element kann auch über das obere Ende des Zwischenspeichers hinaus verfahrbar sein, so dass auch Stapel stabilisiert werden können, die höher sind als der Zwischenspeicher. Im einfachsten Fall hat das Element eine gewisse Masse und übt lediglich seine Gewichtskraft auf den jeweils obersten Gegenstand im Zwischenspeicher aus, wobei im Zwischenspeicher ein Anschlag vorgesehen ist, welcher das Element bei leerem Zwischenspeicher in einer gewissen minimalen Höhe hält. Das Element kann auch aktiv betätigbar sein und durch einen Antrieb, eine Feder oder pneumatisch mit einer gewissen Druckkraft auf das oberste gespeicherte Gebinde gedrückt werden.

Mit Vorteil umfasst der Zwischenspeicher Halteelemente zum Halten der gespeicherten Gegenstände und/oder Sicherungselemente zum Sichern der gespeicherten Elemente gegen horizontale Bewegungen relativ zum Zwischenspeicher oder gegen das Umkippen. Solche Halteelemente zur Verhinderung von Rutschen oder Kippen der Gegenstände können grundsätzlich gleichartig aufgebaut sein wie die Halteelemente der Schwerter. In einer erfindungsgemässen Sammelvorrichtung können aber durchaus im Zwischenspeicher und in der Greifvorrichtung unterschiedliche Halte- und Sicherungselemente gewählt werden.

Mit Vorteil umfasst der Zwischenspeicher, vorzugsweise an seinem unteren Ende, einen Kalibrierteil, der die Orientierung der Gegenstände beim Einführen in den Zwischenspeicher korrigiert.

Beim Stapeln von Gegenständen kann es passieren, dass ein Gegenstand nicht genau auf dem darunterliegenden abgesetzt wird, oder dass er sich aufgrund einer ungünstigen Gewichtsverteilung verschiebt oder neigt. Damit solche Stapelfehler nicht zu einer Behinderung der Sammelvorrichtung führen können und damit die neu gebildeten Stapel möglichst fehlerfrei sind, werden die aufgenommenen und abzusetzenden Gegenstände so gerichtet, dass ihre Begrenzungsflächen jeweils in derselben Ebene liegen. Dies erfolgt mit Vorteil am Eingang des Zwischenspeichers, welchen sämtliche transportierten Gegenstände in der Regel zwei Mal, nämlich beim Aufnehmen und vor dem Absetzen, passieren müssen. Falls der Zwischenspeicher und damit das Justierelement vertikal nicht unterhalb die Stapelhöhe verfahren werden, muss bei der Wahl der Form des Justierelements zudem keinerlei Rücksicht auf das Layout des Lagerraums genommen werden.

Vorzugsweise wird der Kalibrierteil durch zwei C-förmige Justierelemente gebildet. Diese umfassen beim Anheben die Gegenstände zumindest teilweise, sind an deren Grösse angepasst und zwingen also die Gegenstände in eine vorgegebene Orientierung. Dies führt zu einem fehlerfreien Stapel.

Die C-förmigen Elemente sind so am Zwischenspeicher angeordnet, dass deren Basen parallel zu den Seitenwänden liegen und die beiden an den Basen jeweils angeordneten Ausleger senkrecht dazu nach innen gerichtet sind.

Wird die Sammelvorrichtung so ausgeführt, dass sie in zwei einander gegenüberstehende Hälften aufgeteilt wird, umfasst jede Hälfte jeweils ein Justierelement. Bei der Anpassung der Sammelvorrichtung an einen bestimmten Gegenstandsquerschnitt stimmt dann auch bereits der Abstand der C-förmigen Justierelemente, und nur noch die Länge der Basis muss gegebenenfalls angepasst werden.

Mit Vorteil umfasst eine Sammelvorrichtung mehrere Zwischenspeicher. So kann ein Gegenstand oder ein Stapelteil in einen beliebigen der Zwischenspeicher aufgenommen werden. Dies bietet die Vorteile, dass bei gleicher Bauhöhe mehr Gegenstände zwischengespeichert werden können. Ausserdem können gleichzeitig so viele Stapel mit beliebig wählbaren Gegenständen gebildet werden, wie die Sammelvorrichtung Zwischenspeicher umfasst. Dadurch wird der zurückzulegende Weg der Sammelvorrichtung und damit der durchschnittliche Zeitbedarf zur Bildung eines neuen Stapels erheblich verkürzt. Gegenüber der Anordnung mehrerer voneinander unabhängiger Sammelvorrichtungen im selben Lagerbereich ist diese Lösung zudem wesentlich einfacher und kostengünstiger.

Mit Vorteil umfasst die Anordnung eine Speichereinheit, welche unabhängig von der Sammelvorrichtung bewegbar ist und welche derart ausgebildet ist, dass im Zwischenspeicher der Sammelvorrichtung aufgenommene Gegenstände direkt in die Speichereinheit übergebbar sind. Wenn die Sammelvorrichtung gefüllt ist, muss sie nicht unmittelbar an den Bestimmungsort der aufgenommenen Gegenstände verfahren werden, um diese dort abzusetzen. Vielmehr können die Gegenstände vorerst an die Speichereinheit übergeben werden, welche für die Übergabe zur Sammelvorrichtung hin verfahren werden kann. Die Speichereinheit ist zweckmässigerweise so dimensioniert, dass ihr Fassungsvermögen grösser ist als dasjenige der Sammelvorrichtung, oder es sind mehrere Speichereinheiten vorgesehen. Dadurch müssen die Speichereinheiten und die Sammelvorrichtung erst dann an den möglicherweise weit entfernten Bestimmungsort der Gegenstände verfahren werden, wenn entweder alle Speichereinheiten voll sind oder wenn sämtliche am Bestimmungsort abzusetzenden Gegenstände aufgenommen sind. Dies hat auch den logistischen Vorteil, dass der Bestimmungsort in grösseren Abständen von der Sammelvorrichtung beansprucht wird, so dass in diesem Bereich andere Tätigkeiten weitgehend ungehindert ausgeführt werden können.

Bevorzugt sind die Speichereinheiten oberhalb des Lagerbereichs angeordnet und in vertikaler Richtung fest, wobei die Höhe einer Speichereinheit der Höhe der Sammelvorrichtung entspricht. Auf diese Weise kann eine Speichereinheit den gesamten Inhalt eines Zwischenspeichers übernehmen, ohne dass ein grösserer Freiraum oberhalb des Lagerbereichs benötigt würde als der für den Betrieb der Sammelvorrichtung ohnehin zur Verfügung stehende.

Die Speichereinheiten sind auch zusammen mit Sammelvorrichtungen verwendbar, bei welchen die Greifvorrichtung nicht im Wesentlichen durch zwei einander gegenüberliegende Schwerter gebildet ist. Beispielsweise mit Greifvorrichtungen, welche die aufzunehmenden Gegenstände auf drei Seiten umgreifen.

Bevorzugt ist die Speichereinheit im Wesentlichen C-förmig ausgebildet mit einem rückwärtig angeordneten, vertikal verlaufenden Basisteil und zwei am Basisteil gehaltenen, mittig angeordneten, vorstehenden Halteteilen, zwischen welchen die Gegenstände aufnehmbar sind. Diese Form der Speichereinheit ist besonders vorteilhaft beim Zusammenwirken mit Sammelvorrichtungen, welche durch zwei einander gegenüberliegende Seitenträger gebildet sind. Die Gegenstände sind im Zwischenspeicher durch die Seitenträger seitlich gehalten, während sie in der C-förmigen Speichereinheit zwischen dem unteren und oberen Halteteil aufgenommen sind. Die Sammelvorrichtung kann deshalb ungehindert in die Speichereinheit verfahren werden und dort die Gegenstände direkt an die Speichereinheit übergeben bzw. von der Speichereinheit aufnehmen, beispielsweise indem die Seitenträger des Zwischenspeichers kurzzeitig auseinander verfahren werden.

Der obere Halteteil ist bevorzugt in vertikaler Richtung bewegbar und wird durch eine Feder oder einen Pneumatikzylinder auf den obersten gehaltenen Gegenstand gedrückt, so dass die in der Speichereinheit gestapelten Gegenstände sicher gehalten werden.

Vorzugsweise sind mehrere Speichereinheiten an einer Portalbrücke fest angeordnet, und die Sammelvorrichtung ist an einer weiteren Portalbrücke verfahrbar angeordnet, wobei die Speichereinheiten und die Sammelvorrichtung einander gegenüber liegen. Dies ermöglicht eine grosse Kapazität in den Speichereinheiten und eine einfache Übergabe der Gegenstände zwischen der Sammelvorrichtung und den Speichereinheiten. Die aufzunehmenden, im Lagerbereich gelagerten Gegenstände werden sukzessive von der Sammelvorrichtung aufgenommen. Sobald die Sammelvorrichtung voll ist, wird die Portalbrücke mit den Speichereinheiten zur Sammelvorrichtung hin verfahren, so dass die Übergabe der Gegenstände aus dem Zwischenspeicher der Sammelvorrichtung an eine der Speichereinheiten erfolgen kann. Die leere Sammelvorrichtung ist nun wieder bereit für die Aufnahme weiterer Gegenstände. Sobald eine gewisse Zahl von Gegenständen aufgenommen ist oder sobald alle Speichereinheiten voll sind, werden die Portalbrücke mit den Speichereinheiten und die Sammelvorrichtung an den Bestimmungsort der Gegenstände verfahren. Dort werden die Gegenstände in den einzelnen Speichervorrichtungen nacheinander wieder von der Sammelvorrichtung übernommen und im Lagerbereich abgesetzt.

Bei einem Verfahren zur Bewirtschaftung eines Lagers, bei welchem in einem Lagerbereich Gegenstände in mehreren Stapeln gelagert sind, wird
a) eine Sammelvorrichtung über den Lagerbereich zu einem beliebigen Stapel mit aufzunehmenden Gegenständen verfahren;
b) eine an der Sammelvorrichtung angeordnete Greifvorrichtung zur Aufnahme eines Stapelteils aus einem oder mehreren Gegenständen des Stapels vertikal nach unten verfahren;
c) der Stapelteil durch zwei einander gegenüberliegende Schwerter der Greifvorrichtung gefasst;
d) die Greifvorrichtung vertikal nach oben verfahren, so dass ein an der Sammelvorrichtung angeordneter Zwischenspeicher die aus dem Lagerbereich aufgegriffenen Gegenstände aufnimmt; und
e) der Zwischenspeicher in weiteren Aufnahmeschritten aus verschiedenen Stapeln sukzessive gefüllt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine dreidimensionale Darstellung einer erfindungsgemässen Sammelvorrichtung;
- Fig. 2: die erfindungsgemässe Sammelvorrichtung im Querschnitt;
- Fig. 3A, B: schematische Darstellungen der Funktionsweise verschiedener Halte- und Sicherungselemente des Zwischenspeichers;
- Fig. 4A, B: eine schematische Darstellung eines Sicherungselements für die Greifvorrichtung einer erfindungsgemässen Anordnung;
- Fig. 5: eine dreidimensionale Darstellung einer anderen erfindungsgemässen Sammelvorrichtung;
- Fig. 6A, B, C: eine schematische Darstellung der Platzverhältnisse in einem Warenlager;
- Fig. 7: eine schematische Darstellung des Ablaufs eines erfindungsgemässen Verfahrens;
- Fig. 8: eine schematische Darstellung einer erfindungsgemässen Vorrichtung mit mehreren Zwischenspeichern; und
- Fig. 9: eine schematische Darstellung einer weiteren erfindungsgemässen Vorrichtung mit zusätzlichen Speichereinheiten.

Grundsätzlich sind in den Figuren gleiche Teile mit gleichen Bezugszeichen versehen.

### Wege zur Ausführung der Erfindung

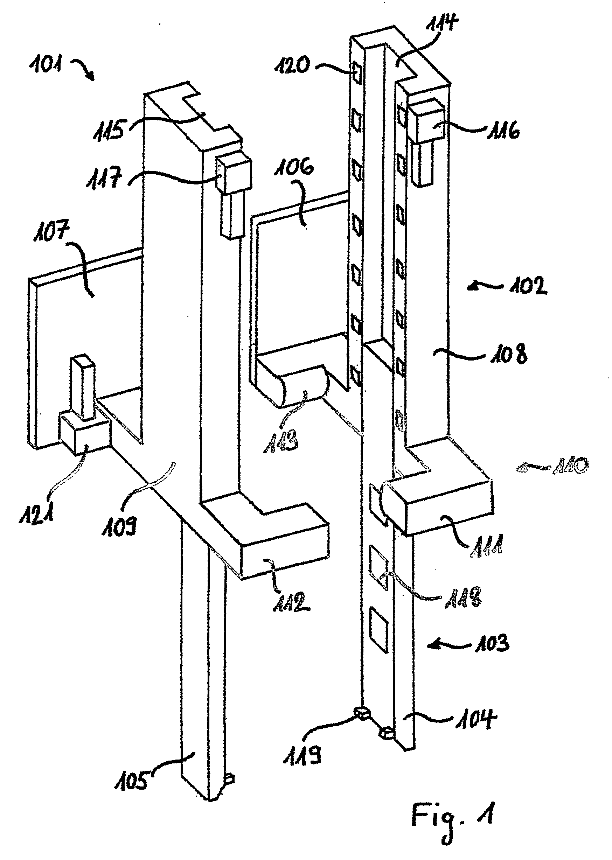

Die Figur 1 zeigt eine dreidimensionale Darstellung einer erfindungsgemässen Sammelvorrichtung. Die Sammelvorrichtung 101 umfasst einen Zwischenspeicher 102 und eine Greifvorrichtung 103, die am unteren Ende des Zwischenspeichers 102 angeordnet und vertikal verfahrbar ist. Die Sammelvorrichtung 101 besteht aus zwei Hälften, die im Wesentlichen symmetrisch zueinander aufgebaut sind. So wird der Zwischenspeicher 102 zwischen zwei Seitenwänden 108, 109 gebildet, während die Greifvorrichtung 103 zwei Schwerter 104, 105 umfasst.

Das erste Schwert 104 ist in der ersten Seitenwand 108, das zweite Schwert 105 ist in der zweiten Seitenwand 109 vertikal verfahrbar gelagert. In den Seitenwänden 108, 109 ist dazu jeweils eine vertikale Ausnehmung 114, 115 vorgesehen, deren Querschnitt dem Querschnitt der Schwerter 104, 105 entspricht, so dass die Schwerter 104, 105 darin geführt werden können und entlang der Ausnehmung 114, 115 verfahrbar sind. Die Innenflächen der Seitenwände 108 bzw. 109 und die Innenflächen der Schwerter 104 bzw. 105 liegen jeweils in derselben Ebene. In der Figur 1 sind die Schwerter 104, 105 in der maximal ausgefahrenen Position gezeigt. Diese wird insbesondere dann eingenommen, wenn sämtliche Behälter eines Stapels aufgenommen oder ein neuer Stapel auf einer Freifläche abgesetzt wird.

Die beiden Hälften der Sammelvorrichtung 101 sind unabhängig voneinander auf separaten Grundplatten 106, 107 gehalten, wobei eine der Grundplatten 107 einen Antrieb 121 aufweist, mit welchem die Grundplatte 107 in horizontaler Richtung relativ zur anderen Grundplatte 106 verfahren werden kann. Dies erlaubt es, den Abstand zwischen den Seitenträgern 108, 109 und den Schwertern 104, 105 einzustellen.

Am unteren Ende des Zwischenspeichers 102 ist ein Kalibrierteil 110 angeordnet. Dieser besteht aus zwei C-förmigen Justierelementen 111, 112, die jeweils an einer Seitenwand 108, 109 so angeordnet sind, dass deren Basis horizontal in der Ebene der Seitenwand 108, 109 liegt und jeweils zwei Ausleger mit Justierbacken 113 horizontal und senkrecht dazu nach innen gerichtet sind. Die vier Justierbacken 113, die Basen der Justierelemente 111, 112 und der jeweils unterste Teil der Seitenwände 108, 109 definieren einen Raum, welcher die horizontale Position der in den Zwischenspeicher 102 aufzunehmenden oder aus dem Zwischenspeicher abzugebenden Behälter genau vorgibt. Die Innenflächen der Justierbacken 113, welche mit den Behältern in Kontakt kommen, weisen eine abgerundete Form auf, wobei die Rundung nach oben und unten gleich ausgebildet ist. Dadurch werden von unten in den Zwischenspeicher 102 transportierte Behälter durch die untere Rundung allmählich und deshalb sanft in die gewünschte Position geschoben. Gleichermassen werden Behälter, die aus dem Zwischenspeicher 102 nach unten abgesetzt werden sollen und sich aus irgendwelchen Gründen im Zwischenspeicher 102 verschoben haben, durch die obere Rundung zentriert, bevor sie den Zwischenspeicher 102 verlassen.

Die Schwerter 104, 105, welche zum Aufnehmen eines oder mehrerer Behälter aus einem Stapel dienen, werden durch Antriebe 116, 117, welche an den Seitenwänden 108, 109 des Zwischenspeichers 102 angeordnet sind, vertikal bewegt. Eine Steuerung bekannter Art sorgt dafür, dass beide Schwerter 104, 105 in der Regel immer dieselbe vertikale Position einnehmen. An ihrem unteren Ende weisen die Schwerter 104, 105 Finger 119 auf, welche im Schwertkörper versenkbar sind. Mit versenkten Fingern 119 können die Schwerter 104, 105 entlang eines Behälterstapels vertikal nach unten verfahren werden, bis die unteren Enden der Schwerter 104, 105 eine - von der Form des Behälters abhängige - Eingriffposition gegenüber dem untersten zu ergreifenden Behälter erreicht haben. Daraufhin werden die Finger 119 ausgefahren, so dass der unterste Behälter auf ihnen aufliegt. Dadurch ist der Behälter (und allfällig auf ihm stehende weitere Behälter) von der Greifvorrichtung 103 gehalten.

Durch die Schwerter 104, 105, welche auf zwei gegenüberliegenden Seiten auf der ganzen Höhe Kontakt mit dem anzuhebenden Stapel haben, sind die Behälter während dem Hebevorgang gegen Kippen und Rutschen in Richtung der Schwerter 104, 105 gesichert. Zur Sicherung der ergriffenen Behälter gegen horizontales Rutschen parallel zu den Schwertern 104, 105 bzw. gegen ein Kippen in derselben Ebene, weisen beide Schwerter 104, 105 an ihrer den Behältern zugewandten Innenseite Druckplatten 118 auf. Sobald die Behälter durch Ausfahren der Finger 119 gefasst sind und bevor das Anheben beginnt, werden die Druckplatten 118 aus der Ebene der Innenseite der Schwerter 104, 105 ausgefahren, so dass die Behälter durch Kraftschluss stabilisiert werden.

Beim Anheben kann es vorteilhaft sein, dass die Druckplatten 118, welche einen Behälter stabilisieren, der gerade den Kalibrierteil 110 durchläuft, kurzzeitig gelöst werden, so dass die Zentrierung des Behälters ungehindert erfolgen kann. Eine Gefahr des Rutschens oder Umkippens besteht in diesem Moment ohnehin nicht, weil der Behälter zusätzlich zu den Schwertern 104, 105 bzw. Seitenwänden 108, 109 durch die C-förmigen Justierelemente 111, 112 geführt und gesichert wird.

Sobald der Behälter bzw. der angehobene Stapelteil seine endgültige Position im Zwischenspeicher 102 erreicht hat, werden Druckplatten 120, welche beidseitig der Ausnehmung 114 entlang der Innenseite der Seitenwände 108, 109 angeordnet sind, aktiviert und gegen die Behälter gedrückt. Die Behälter werden so einerseits in der erreichten Höhe gehalten, andererseits weiterhin gegen Herausrutschen oder Kippen gesichert. Beim Bewegen der Sammelvorrichtung 101 über den Lagerbereich können Beschleunigungen und Verzögerungen, besonders ausgeprägt bei einem Notstopp, nämlich zu erheblichen Kräften auf die Behälter des Stapels im Zwischenspeicher 102 führen. Die Druckplatten 118 und die Finger 119 der Schwerter 104, 105 können nun gelöst werden, so dass die Schwerter neuerlich frei vertikal bewegt und zusätzliche Behälter aufgenommen werden können.

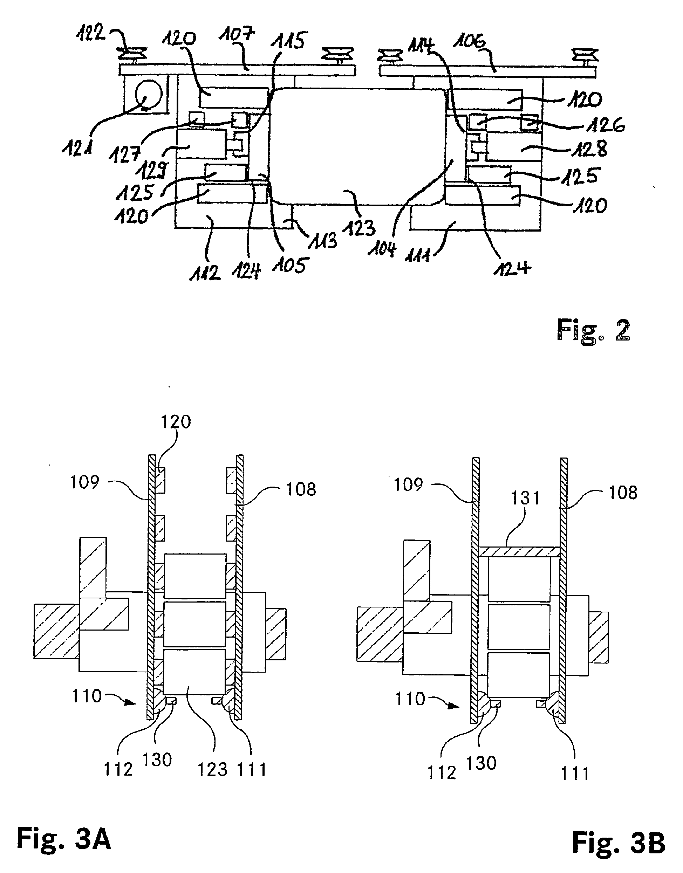

Die Figur 2 zeigt die erfindungsgemässe Sammelvorrichtung in einem Querschnitt entlang einer horizontalen Ebene auf der Höhe des Kalibrierteils 110. Die Grundplatten 106, 107, welche die Sammelvorrichtung tragen, weisen Führungsrollen 122 auf, welche mit Führungsschienen (nicht dargestellt) eines über einen Lagerbereich verfahrbaren Portalroboters zusammenwirken. Mindestens eine der Grundplatten 106, 107 und damit eine Hälfte der Sammelvorrichtung ist mittels des Antriebs 121 entlang der Schiene verschiebbar, so dass der Abstand zwischen den beiden Hälften angepasst werden kann. Die andere Hälfte der Sammelvorrichtung kann auf ihrer Schiene fixiert oder ohne Schiene fest mit dem Portalroboter verbunden werden.

Im Querschnitt gut sichtbar sind die in den Seitenwänden 108, 109 angeordneten Elemente der Sammelvorrichtung. Die Seitenwände 108, 109 kontaktieren einen Behälter 123 mit im Wesentlichen rechteckigem Querschnitt entlang seiner beiden Querseiten. Die C-förmigen Justierelemente 111, 112 zentrieren den Behälter 123 entlang seiner Querrichtung, indem sie auf Abschnitte der Längsseiten wirken. Der Querschnitt ist genau in jener Höhe dargestellt, in dem die Backen 113 der Justierelemente 111, 112 ihre grösste Ausdehnung aufweisen, die Horizontalposition des Behälters 123 ist also dort genau definiert.

Die Seitenwände 108, 109 weisen nun folgende Elemente auf. Die Druckplatten 120 zum Halten und Stabilisieren der im Zwischenspeicher 102 gespeicherten Behälter 123 sind beidseitig ausserhalb der Ausnehmung 114, 115 angeordnet. Sie sind pneumatisch über Druckkolben betätigt. Die Schwerter 104, 105 weisen an ihrer Aussenseite, die der Grundfläche der Ausnehmung 114, 115 zugewandt ist, je eine Zahnstange 124 auf. Diese wirkt zur vertikalen Bewegung der Schwerter 104, 105 mit einer Zahnscheibe 125 zusammen, welche vom Antrieb 116, 117 betätigt wird. Die Schwerter 104, 105 werden zudem in der Ausnehmung 114, 115 durch eine Führung 128, 129 gehalten. Diese ist an der Grundfläche der Ausnehmung 114, 115 angeordnet und weist eine Schiene auf, die mit einer Nut auf der Innenseite des Schwertes 104, 105 zusammenwirkt, so dass die möglichen Bewegungen der Schwerter 104, 105 auf die Vertikalrichtung, entlang der Seitenwand 108, 109 beschränkt sind. In der Seitenwand 108, 109 ist entlang der Ausnehmung 114, 115, auf der der Zahnstange 124 gegenüberliegenden Seite weiter je eine Energiekette 126, 127 zur Energieübertragung angeordnet. Diese umfasst flexible Stromkabel, Druckluft- oder gegebenenfalls Hydraulikschläuche mit einer Länge die es erlaubt, das jeweilige Schwert 104, 105 in allen seinen vertikalen Positionen mit entsprechender Energie zu versorgen. Diese Energie wird insbesondere zum Aus- und Einfahren der Druckplatten 118 sowie der Finger 119 benötigt.

Die Druckplatten 118 der Schwerter 104, 105 sind in dem in der Figur 2 dargestellten Querschnitt nicht sichtbar. Sie befinden sich unterhalb der Schnittebene.

Die Figuren 3A und 3B sind schematische Darstellungen der Funktionsweise verschiedener Halte- und Sicherungselemente des Zwischenspeichers. Der Übersichtlichkeit halber ist die Greifvorrichtung nicht dargestellt. Figur 3A zeigt einen Zwischenspeicher, bei welchem die darin gespeicherten Behälter 123 durch am unteren Ende des Zwischenspeichers angeordnete, ausfahrbare Finger 130 gehalten und durch in den Seitenwänden 108, 109 angeordnete Druckplatten 120 gesichert werden. Die Druckplatten 120 werden pneumatisch betätigt und zumindest während des Bewegens der Sammelvorrichtung über den Lagerbereich ausgefahren, um ein Rutschen oder Kippen der Behälter 123 im Zwischenspeicher zu verhindern.

Figur 3B zeigt eine Variante, in welcher die Sicherungsfunktion anstatt von Druckplatten von einer vertikal verfahrbaren Stabilisierplatte 131 wahrgenommen wird. Die Stabilisierplatte 131 ist in den Ausnehmungen der Seitenwände so geführt, dass sie sich lediglich in vertikaler Richtung bewegen kann. Aufgrund ihres Gewichts wirkt die Stabilisierplatte 131 ständig mit einer gewissen Kraft auf den obersten Behälter. Dies verhindert durch Formschluss ein Kippen des obersten Behälters und durch erhöhte Reibung zwischen den gestapelten Behältern auch deren Herausrutschen zwischen den Seitenwänden. Selbstverständlich können beide Sicherungselemente, Druckplatten und eine Stabilisierplatte kombiniert verwendet werden.

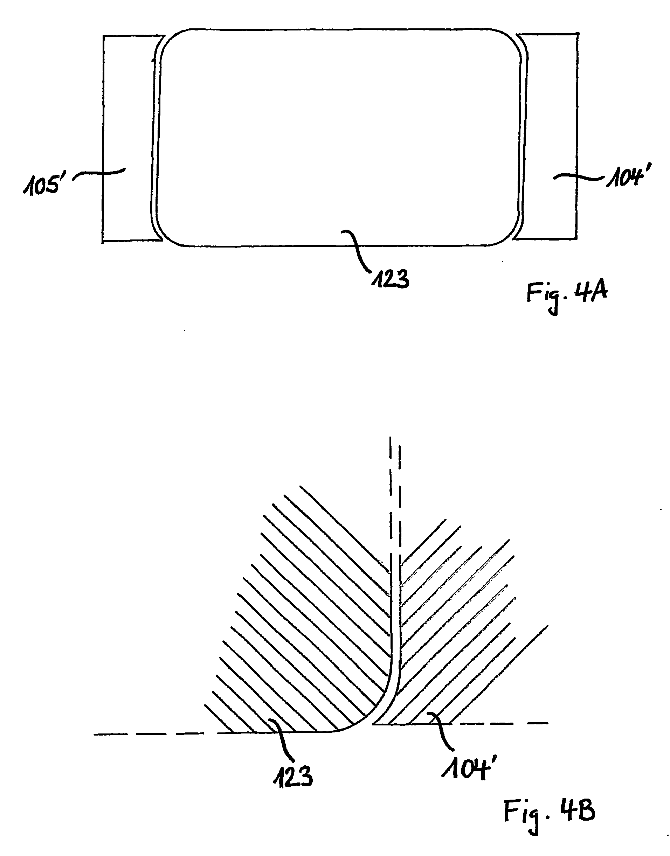

Die Figuren 4A und 4B zeigen ein Sicherungselement zur Sicherung der Behälter 123 gegen Rutschen oder Kippen während des Hebe- oder Absenkvorgangs der Greifvorrichtung. Das Sicherungselement wird durch die besondere Form der Schwerter 104', 105' gebildet.

Diese weisen an ihrer Innenseite auf der ganzen Länge oder in einem oder mehreren Abschnitten einen Querschnitt auf, der der Begrenzung des Behälters 123 auf dessen Querseite genau angepasst ist. Im dargestellten Ausführungsbeispiel weist der Behälter 123 einen im Wesentlichen rechteckigen Querschnitt auf, wobei die vier Ecken abgerundet sind. Die Innenseite der Schwerter 104', 105' weist nun einen konkaven Querschnitt auf, so dass sie den Rundungen in den Ecken teilweise folgt. Die Breite der Schwerter 104', 105' ist aber so gewählt, dass sie nicht über die seitliche Begrenzungsfläche des Behälters 123 hinausragen.

Der Behälter 123 wird durch die vorstehenden Abschnitte der Schwerter 104', 105' sowohl am horizontalen Wegrutschen als auch am Kippen gehindert. Die Formgebung der Schwerter 104', 105' führt weder zu einem grösseren Bedarf an Freiraum zwischen längs benachbarten Stapeln noch sind aktive, d. h. steuerbare und bewegbare Elemente für die Sicherung nötig. Der Zwischenspeicher kann Sicherungselemente derselben Art aufweisen, welche dieselben Vorteile bieten. Sicherungselemente der dargestellten Art übernehmen - zumindest teilweise - auch die Aufgaben des Kalibrierteils. Auf einen solchen kann also in einer Ausführung der erfindungsgemässen Anordnung mit Sicherungselementen wie in Figur 4 dargestellt wahlweise verzichtet werden.

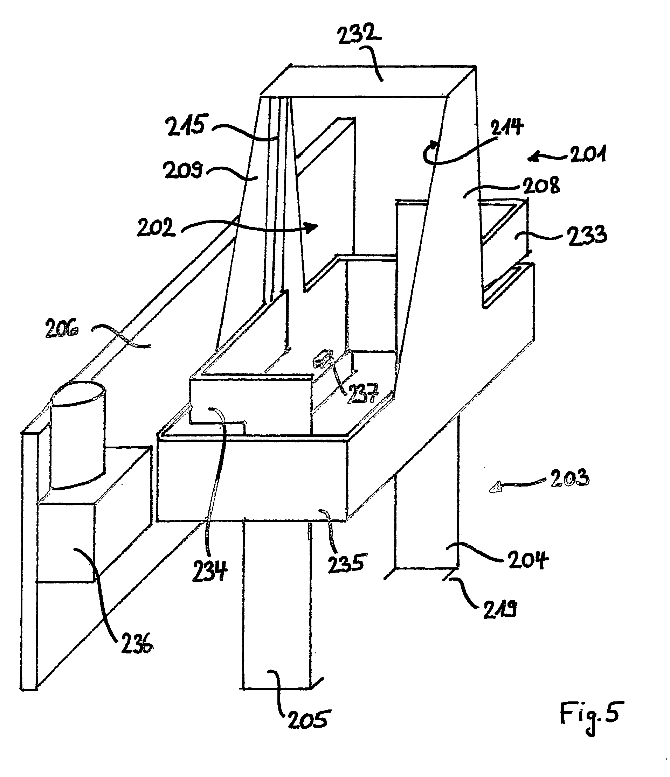

Die Figur 5 stellt eine andere erfindungsgemässe Sammelvorrichtung dreidimensional dar. Bei dieser Ausführungsform wird die Sammelvorrichtung 201 wiederum durch einen Zwischenspeicher 202 und eine Greifvorrichtung 203 gebildet. Der Zwischenspeicher 202 weist an seinem unteren Ende einen geschlossenen umlaufenden Rahmen 235 auf. Von der Mitte der Längsseiten des Rahmens 235 verläuft jeweils eine Seitenwand 208, 209 vertikal nach oben, welche in der dargestellten Ausführung von unten nach oben schmaler wird. An ihrem oberen Ende sind die Seitenwände 208, 209 durch einen Verbindungssteg 232 verbunden, welcher zur Stabilität des Zwischenspeichers 202 beiträgt und diesen nach oben hin abschliesst.

In den Seitenwänden 208, 209 verlaufen vertikale Ausnehmungen 214, 215 in welchen die Schwerter 204, 205 geführt sind. Die Schwerter 204, 205 sind über Winkel 233, 234 mit der Führung verbunden, so dass sie auf der Querseite des Zwischenspeichers 202 angeordnet sind. Die vertikalen Ebenen, die durch die Schwerter 204, 205 und durch die Seitenträger des Zwischenspeichers 202 definiert werden, schliessen also einen Raum mit einem im Wesentlichen rechteckigen Querschnitt ein. Werden Behälter mit einem diesem ungefähr entsprechenden Querschnitt in den Raum aufgenommen, sind sie gegen horizontales Rutschen und gegen Kippen gesichert.

Die Schwerter 204, 205 weisen an ihrem unteren Ende jeweils zwei Finger 219 auf, welche in den Bereich zwischen den Schwertern 204, 205 verfahrbar sind, so dass Behälter dadurch gehalten werden können. Sobald die von der Greifvorrichtung 203 erfassten Behälter nach oben, in den Zwischenspeicher 202 gehoben worden sind, werden sie dort fixiert, so dass die Schwerter 204, 205 der Greifvorrichtung 203 wiederum frei sind für weitere Aufnahmevorgänge. Die Fixierung erfolgt durch mehrere aus dem Rahmen 235 ausfahrbare Finger 237. Diese sind auf der Längsseite des Rahmens 235 unten angeordnet, so dass sie den Winkel 233, 234 bei seiner vertikalen Bewegung nicht behindern können.

Die Sammelvorrichtung 201, genauer deren Rahmen 235 ist wiederum vertikal unbeweglich an einer Grundplatte 206 befestigt, welche mittels eines Antriebs 236 über den Lagerbereich verfahren werden kann.

Zur Stabilisierung der Behälter in der Greifvorrichtung können die Schwerter auch bei dieser Ausführung mit Druckplatten oder anderen Sicherungselementen bestückt werden.

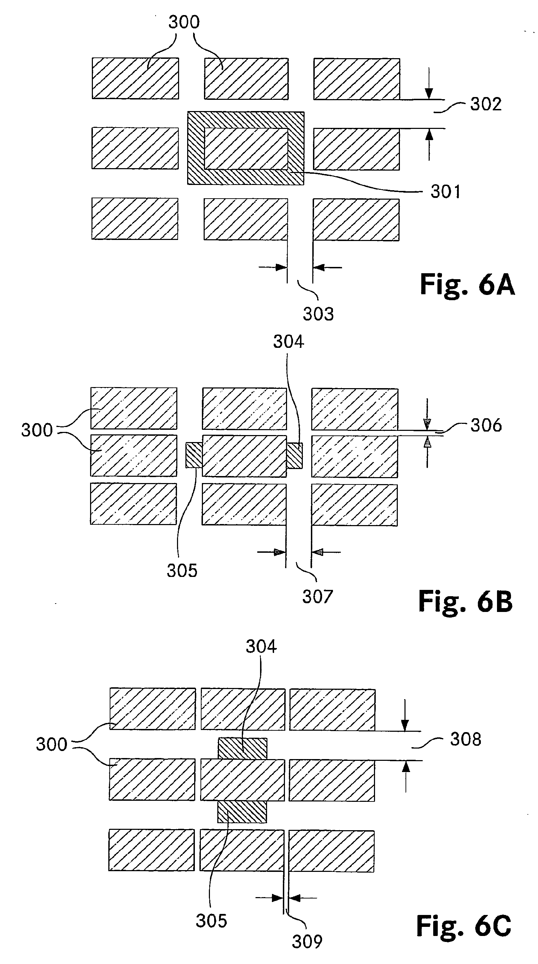

Die Figur 6 ist eine schematische Darstellung der Platzverhältnisse in einem Warenlager. Figur 6A zeigt die Anordnung von Stapeln 300 in einem Lagerbereich, welcher durch eine bekannte Anordnung bewirtschaftet wird. Diese Anordnung weist eine die Behälter des Stapels 300 umfassende, im Wesentlichen rahmenförmige Greifvorrichtung 301 auf. Auf allen vier Seiten des Stapels wird also ein gewisser Freiraum 302 bzw. 303 benötigt, damit die Greifvorrichtung 301 für die Aufnahme oder das Absetzen eines oder mehrerer Behälter nach unten verfahren werden kann.

Figuren 6B, 6C zeigen die Platzverhältnisse in einem Warenlager, das mit einer erfindungsgemässen Anordnung bewirtschaftet wird. Von dieser werden nur die zwei Schwerter 304, 305 in den Stapelbereich, d.h. unterhalb die Stapelhöhe, verfahren. Ein Freiraum 308 wird von der Anordnung nur auf jenen zwei gegenüberliegenden Seiten des Stapels 300 benötigt, auf den zwei anderen Seiten können die Stapel 300 so eng wie möglich angeordnet werden, es ergibt sich ein sehr kleiner Freiraum 309 zwischen benachbarten Stapeln. In Figur 6B greifen die Schwerter 304, 305 auf der Querseite der Behälter an, in Figur 6C auf der Längsseite. Je nach Form der Behälter und des Lagerraums kann - mit derselben Sammelvorrichtung - die vorteilhaftere Anordnung der Stapel 300 bzw. der Sammelvorrichtung gewählt werden.

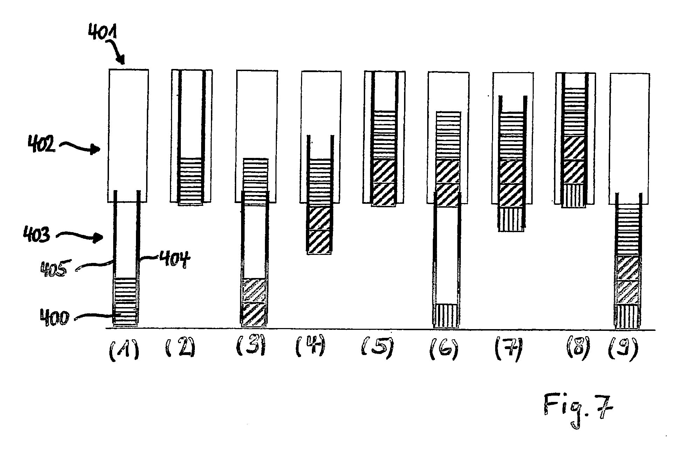

Die Figur 7 zeigt eine schematische Darstellung des Ablaufs eines erfindungsgemässen Verfahrens.
(1) In einem ersten Schritt sollen zwei Kisten 400 in die Sammelvorrichtung 401 aufgenommen werden. Dazu wird die Greifvorrichtung 403 mit den Schwertern 404, 405 vertikal nach unten verfahren, bis das untere Ende der Greifvorrichtung 403 die untere aufzunehmende Kiste fassen kann.
(2) In einem nächsten Schritt werden die gefassten Kisten 400 durch Anheben der Greifvorrichtung 403 in den Zwischenspeicher 402 verfahren. Dort werden sie fixiert und gegen Rutschen und Kippen gesichert. Daraufhin wird die Sammelvorrichtung 401 zum nächsten Stapel, aus dem Kisten aufgenommen werden sollen, verschoben.
(3) Dort wird abermals die Greifvorrichtung 403 abgesenkt und fasst erneut zwei Kisten. Die im Zwischenspeicher 402 fixierten Behälter bleiben vorerst in den untersten zwei Positionen des Zwischenspeichers 402 fixiert.
(4) Als nächstes werden die neu aufgenommenen Kisten durch die Greifvorrichtung 403 soweit gehoben, dass die Grundfläche des im Zwischenspeicher 402 gespeicherten Teilstapels auf dem neu gehobenen Teilstapel aufliegt.
(5) Nun können die Halte- und Sicherungselemente des Zwischenspeichers 402 gelöst werden. Sämtliche vier Kisten in der Sammelvorrichtung 401 werden nun durch die Greifvorrichtung 403 gehalten. Diese wird jetzt wieder ganz angehoben, so dass die zwei zusätzlichen Behälter ebenfalls in den Zwischenspeicher 402 gelangen. Die vier gespeicherten Behälter belegen nun die untersten vier Plätze des Zwischenspeichers 402. Abermals werden sämtliche Behälter im Zwischenspeicher 402 fixiert.
(6) In einem nächsten Schritt wird die Sammelvorrichtung 401 zu einem weiteren Stapel verfahren und greift einen zusätzlichen Behälter auf.
(7) Dieser wird angehoben, bis sich ein aus fünf Behältern bestehender Stapel ergibt.
(8) Dieser wird erneut ganz in den Zwischenspeicher 402 verschoben und fixiert.
(9) Nach dem Verfahren der Sammelvorrichtung 401 bis zum Zielort werden die Halte- und Sicherungselemente des Zwischenspeichers 402 abermals gelöst und die Greifvorrichtung 403 wird abgesenkt. Nach Lösen der Halteelemente der Greifvorrichtung 403 und Zurückziehen der beiden Schwerter 404, 405 ist der aus fünf Behältern neu gebildete Stapel abgesetzt und die Sammelvorrichtung 401 kann einen neuen Stapel bilden.

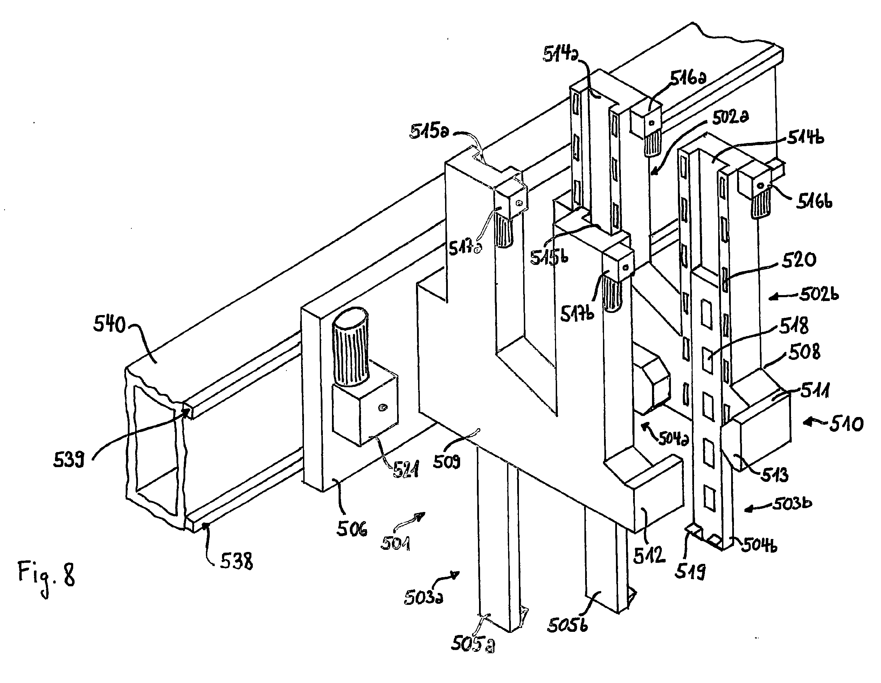

Die Figur 8 zeigt eine schematische Darstellung einer erfindungsgemässen Sammelvorrichtung 501 mit zwei Zwischenspeichern 502a, 502b. Ihr Aufbau entspricht weitgehend dem Aufbau der in der Figur 1 dargestellten Vorrichtung mit einem Zwischenspeicher. Im Unterschied dazu sind die beiden Hälften der Vorrichtung nicht gegeneinander verfahrbar, sondern auf derselben Grundplatte 506 angeordnet. Diese Grundplatte 506 ist mittels eines Antriebs 521 auf Schienen 538, 539 horizontal verfahrbar, welche an einem Träger 540 des Portals angeordnet sind. Die Sammelvorrichtung 501 umfasst zwei hintereinander angeordnete Zwischenspeicher 502a, 502b mit jeweils eigenen Greifvorrichtungen 503a, 503b. Die beiden Hälften werden durch die Seitenwände 508 und 509 gebildet, welche durchgehend ausgebildet sind und Ausnehmungen 514a und 514b bzw. 515a und 515b zur Aufnahme der Schwerter 504a, 504b, 505a, 505b aufweisen.

Der Träger 540 sowie die Grundplatte 506 können so verfahren werden, dass aus einem beliebigen Stapel Behälter in einen der beiden Zwischenspeicher 502a, 502b aufgenommen werden können. Mit der in der Figur 8 dargestellten Vorrichtung können also gleichzeitig zwei Stapel gebildet werden. Besonders wenn die beiden Stapel gleich oder ähnlich aufgebaut sind, resultiert eine grosse Zeitersparnis, weil gegenüber zwei separaten Kommissioniervorgängen ein wesentlicher Teil der Verschiebungszeit eingespart werden kann. Werden Mehrfachspeicher verwendet, kann es vorteilhaft sein, das Lager so anzuordnen, dass jeweils mehrere Reihen gleicher Behälter direkt hintereinander angeordnet sind. Die beiden Zwischenspeicher 502a, 502b weisen je eigene Greifvorrichtungen 503a, 503b auf, die gleichzeitig Behälter aufnehmen und abgeben können und so in Bezug auf die Aufnahme und Abgabe von Behältern völlig unabhängig voneinander sind. Dies erlaubt die gleichzeitige Kommissionierung zweier identischer Bestellungen ohne jeglichen Zeitverlust.

Anstelle von zwei Zwischenspeichern kann auch eine grössere Anzahl auf dieselbe Art und Weise hintereinander angeordnet werden. Auch eine Anordnung der Zwischenspeicher nebeneinander auf der gleichen Grundplatte ist möglich. Anstatt jeweils eine Greifvorrichtung pro Zwischenspeicher vorzusehen, können mehrere Zwischenspeicher auch von derselben, verfahrbaren Greifvorrichtung versorgt werden. Bei hintereinander angeordneten Zwischenspeicher ist z.B. je eine Führung für ein Schwert auf der Aussenseite der Seitenwände angeordnet und horizontal verfahrbar. Die Finger am unteren Ende der Schwerter sind entsprechend verlängert, damit ein Behälter zwischen den Seitenwänden angehoben werden kann. Die Anordnung der Greifvorrichtungen auf der Aussenseite der Seitenwände hat allerdings den Nachteil eines erhöhten Platzbedarfs senkrecht zu den Seitenwänden und kann einen grösseren Abstand benachbarter Behälterstapel bedingen.

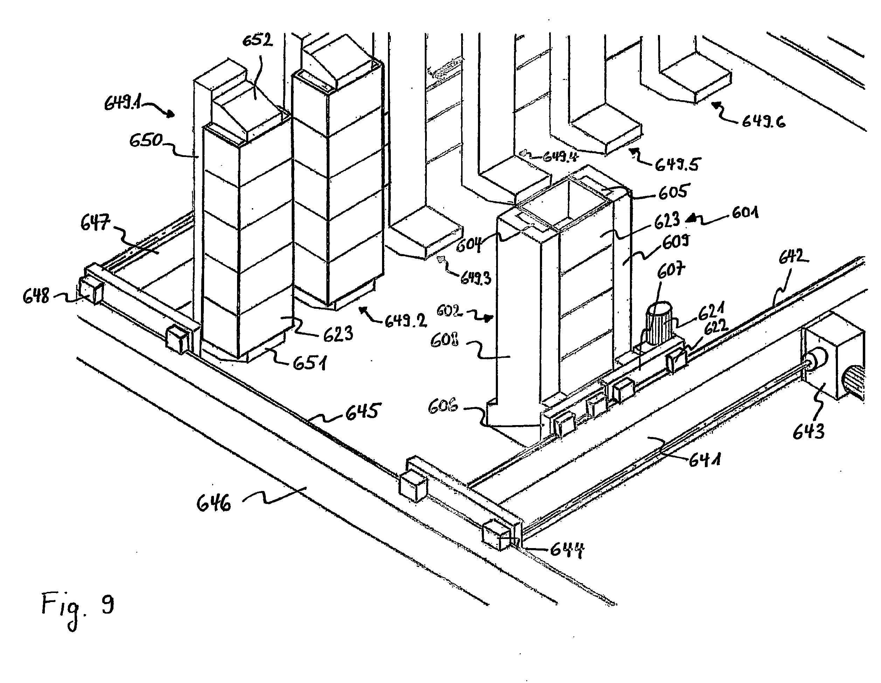

Die Figur 9 ist eine schematische Darstellung einer weiteren erfindungsgemässen Vorrichtung mit zusätzlichen Speichereinheiten. Die Vorrichtung umfasst wiederum eine Sammelvorrichtung 601, welche im Wesentlichen der in der Figur 1 dargestellten Sammelvorrichtung entspricht. Die Sammelvorrichtung 601 umfasst einen vertikal unbeweglichen Zwischenspeicher 602. Dieser wird durch zwei Seitenwände 608, 609 gebildet, in welchen auch die seitlichen Schwerter 604, 605 zum Aufnehmen und Absetzen von Behältern 623 vertikal verschiebbar gelagert sind. Die Seitenwände 608, 609 sind an Grundplatten 606, 607 befestigt, welche über Führungsrollen 622 auf einer Schiene 642 einer Portalbrücke 641 abgestützt sind. Der Abstand der Grundplatten 606, 607 zueinander kann durch einen Antrieb 621 verändert werden. Die Sammelvorrichtung 601 ist entlang der Portalbrücke 641 verschiebbar.

Die Portalbrücke 641 ist über Führungsrollen 644 an ihren beiden Enden auf Schienen 645 gelagert, welche an Portalträgern 646 angeordnet sind. Die Portalbrücke 641 umfasst einen Antrieb 643, mittels welchem Sie entlang den Portalträgern 646 bewegt werden kann. Eine zweite, gleich aufgebaute Portalbrücke 647 ist nun parallel zur ersten Portalbrücke 641 ebenfalls über Führungsrollen 648 auf den Schienen 645 der Portalträger 646 gelagert. Entlang der zweiten Portalbrücke 647 sind mehrere Speichereinheiten 649.1...649.6 fest angebracht.

Die Speichereinheiten 649.1...649.6 sind alle gleich aufgebaut. Im Folgenden werden sie am Beispiel der Speichereinheit 649.1 beschrieben. Diese wird durch einen Vertikalträger 650 gebildet, welcher an der Portalbrücke 647 befestigt ist. Am unteren Ende des Vertikalträgers 650 ist ein unterer Halteteil 651 fest angeordnet. Dieser steht vor und bildet so eine Auflage für die in die Speichereinheit 649.1 aufzunehmenden Behälter 623. Ein weiterer, oberer Halteteil 652 ist oberhalb des unteren Halteteils 651 angeordnet und in einer vertikalen Führung verschiebbar.

Um nun im Zwischenspeicher 602 der Sammelvorrichtung 601 gehaltene Behälter 623 in eine der Speichereinheiten 649.1...649.6 zu übergeben, wird zunächst die Sammelvorrichtung 601 entlang ihrer Portalbrücke 641 so verfahren, dass sie exakt gegenüber der betreffenden, leeren Speichereinheit angeordnet ist. Der obere Halteteil 652 der Speichereinheit wird nach oben verfahren. Als Nächstes werden die beiden Portalbrücken 641, 647 aufeinander zu verfahren, bis die Behälter 623 mit ihren bezüglich der Sammelvorrichtung 601 vorderen Seiten am Vertikalträger 650 der Speichereinheit anliegen. Die Abstände der Speichereinheiten 649.1...649.6 sind so gewählt und der untere Halteteil 651 ist so dimensioniert, dass die Seitenwände 608, 609 der Sammelvorrichtung 601 dabei ungehindert beidseitig des unteren Halteteils 651 verfahrbar sind. Bei einer Sammelvorrichtung mit vertikal verfahrbaren Schwertern muss entsprechend der Abstand zwischen benachbarten Speichereinheiten etwas grösser gewählt werden als zwischen den Behälterstapeln im Lagerbereich, zwischen denen lediglich die schmaleren Schwerter nach unten greifen.

Nun wird der obere Halteteil 652 der Speichereinheit nach unten verfahren, so dass die Behälter 623 in der Speichereinheit festgeklemmt sind. Jetzt kann der Abstand der Seitenwände 608, 609 durch den Antrieb 621 geringfügig vergrössert werden und die Portalbrücke 641 zusammen mit ihrer Sammelvorrichtung 601 von der Speichereinheit entfernt werden. Die Übergabe kann also sehr schnell erfolgen und ohne dass eine Vertikalbewegung der im Zwischenspeicher 602 gehaltenen Gegenstände 623 erfolgen muss. Deswegen ist auch keine zusätzliche freie Höhe oberhalb des Lagerbereichs notwendig.

Während des Auffüllvorgangs der Sammelvorrichtung 601, welcher so verläuft wie weiter oben unter Bezugnahme auf die Figuren 6 und 7 beschrieben, kann die zweite Portalbrücke 647 mit den Speichereinheiten 649.1...649.6 jeweils der ersten Portalbrücke 641 in einem bestimmten Abstand folgen, so dass das Austauschen von Behältern innert kurzer Zeit erfolgen kann. Alternativ kann die zweite Portalbrücke 646 auch während des Auffüllvorgangs an ein Ende der Portalträger 646 verfahren werden, damit die Sammelvorrichtung 601 ungehindert über den gesamten Lagerbereich verfahren werden kann.

Zum Absetzen der in den Speichereinheiten 649.1...649.6 gehaltenen Behälter 623 werden beide Portalbrücken 641, 647 in den Bestimmungsbereich der Behälter 623 verfahren, also beispielsweise an das Ende des Lagerbereichs. Dort werden sukzessive jeweils die in einer der Speichereinheiten 649.1...649.6 gehaltenen Behälter 623 von der Sammelvorrichtung 601 übernommen und mittels der Schwerter 604, 605 am gewünschten Ort abgesetzt. Die Übernahme der Behälter 623 erfolgt analog zur oben beschriebenen Übergabe.

Die Höhe des Zwischenspeichers und die Höhe der Greifvorrichtung, welche durch die Länge der Schwerter bestimmt wird, können dem zu bewirtschaftenden Lager angepasst werden. Relevante Parameter sind in dieser Hinsicht insbesondere die Höhe der zu bildenden Stapel, die maximale Stapelhöhe und der verfügbare Raum oberhalb der Stapelhöhe. Der Zwischenspeicher kann durchaus höher sein und eine grössere Anzahl Behälter fassen als die Greifvorrichtung. Dabei ist nur zu beachten, dass in diesem Fall der Zwischenspeicher entweder vertikal verfahrbar sein muss oder dass andernfalls die Höhe der zu bildenden Stapel durch die Länge der Greifvorrichtung beschränkt wird. Die Kapazität eines vertikal nicht verfahrbaren Zwischenspeichers entspricht deshalb bevorzugt der Kapazität der Greifvorrichtung.

Die relative Verfahrbarkeit zweier Hälften einer erfindungsgemässen Vorrichtung, z.B. jener in den Figuren 1, 2 dargestellten, eröffnet weitere Möglichkeiten. Zum Anheben eines Stapels kann die Sammelvorrichtung oberhalb des Stapels positioniert und die beiden Hälften leicht voneinander entfernt werden. Die Greifvorrichtung wird in der Folge vertikal nach unten verfahren. Durch den leicht erhöhten Abstand zwischen den beiden Hälften und damit der beiden Schwerter der Greifvorrichtung kann diese Bewegung ohne Konflikt mit dem Stapel erfolgen. Sobald die Greifvorrichtung ihre Aufnahmeposition erreicht hat, werden die beiden Hälften mit einem gewissen Druck aufeinander zu bewegt. Die anzuhebenden Behälter werden nun durch die von den Schwertern auf ihre Seitenflächen ausgeübte Kraft gehalten. Dies kann noch durch fest angebrachte (passive) Vorsprünge an der Innenseite am unteren Ende der Schwerter unterstützt werden.

Die Schwerter werden nun in bekannter Weise angehoben und die Behälter dadurch in den Zwischenspeicher verbracht. Bei dieser Ausführung der erfindungsgemässen Anordnung ist es von Vorteil, wenn die Seitenwände des Zwischenspeichers eine etwas grössere Distanz haben als die Innenseiten der Schwerter, so dass der Übergang von den Schwertern in den Zwischenspeicher reibungslos verläuft. Im Zwischenspeicher werden die Behälter wie bereits beschrieben durch ausfahrbare Finger an deren unteren Ende gehalten. Die Länge der Finger ist so gewählt, dass auch bei einem erneuten leichten Auseinanderfahren der beiden Hälften zur Aufnahme eines neuen Teilstapels die Behälter im Zwischenspeicher gehalten werden.

Indem die Verfahrbarkeit der beiden Hälften ausgenutzt wird, können sämtliche aktiven Elemente, wie Finger, Klinken oder Druckplatten an den Schwertern eingespart werden.

Die Schwerter können noch einfacher konstruiert werden und eine Energieübertragung vom Zwischenspeicher zu den Schwertern erübrigt sich.

Die Ausführung der Sammelvorrichtung zum Zusammenwirken mit den zusätzlichen Speichereinheiten muss nicht der dargestellten Form entsprechen. Zusammenfassend ist festzustellen, dass die Erfindung eine Anordnung und ein Verfahren schafft, welche eine verbesserte Nutzung des verfügbaren Lagerraums erlauben.

## Patentansprüche

1. Anordnung zur Bewirtschaftung eines Warenlagers, bei welchem in einem Lagerbereich Gegenstände in mehreren Stapeln gelagert sind, mit
a) einer Sammelvorrichtung (101; 201; 501; 601), die, insbesondere durch einen Portalroboter, über den Lagerbereich beliebig verfahrbar ist;
b) einem an der Sammelvorrichtung (101; 201; 501; 601) angeordneten Zwischenspeicher (102; 202; 502a, 502b; 602) zur Aufnahme von aus dem Lagerbereich aufzugreifenden Gegenständen, wobei der Zwischenspeicher (102; 202; 502a, 502b; 602) in getrennten Aufnahmeschritten aus verschiedenen Stapeln sukzessive füllbar ist; und
c) einer an der Sammelvorrichtung (101; 201; 501; 601) angeordneten Greifvorrichtung (103; 203; 503a, 503b) zum Anheben eines oder mehrerer Gegenstände aus einem der Stapel, wobei die Greifvorrichtung (103; 203; 503a, 503b) vertikal verfahrbar Ist;
**dadurch gekennzeichnet, dass**
d) die Greifvorrichtung (103; 203; 503a, 503b) im Wesentlichen durch zwei einander gegenüberliegende Schwerter (104, 105; 204, 205; 504a, 504b, 505a, 505b; 604, 605) gebildet ist, wobei die Schwerter (104, 105; 204, 205; 504a, 504b, 505a, 505b; 604, 605) gegenüber dem Zwischenspeicher (102; 202; 502a, 502b; 602) vertikal verfahrbar sind.

2. Anordnung nach Anspruch 1, **dadurch gekennzeichnet, dass** die Sammelvorrichtung (101; 201; 601) in zwei einander gegenüberstehende Hälften aufgeteilt ist, die relativ zueinander verfahrbar sind.

3. Anordnung nach Anspruch 1 oder 2, **dadurch gekennzeichnet, dass** der Zwischenspeicher (102; 502a, 502b; 602) im Wesentlichen durch zwei einander gegenüberliegende Seitenträger (108, 109; 508, 509; 608, 609) gebildet ist.

4. Anordnung nach Anspruch 3, **dadurch gekennzeichnet, dass** die Schwerter (104, 105; 504a, 504b, 505a, 505b; 604, 605) der Greifvorrichtung (103; 503a, 503b) in den Seitenträgern (108, 109; 508, 509; 608, 609) des Zwischenspeichers (102; 502a, 502b; 602) vertikal verfahrbar gelagert sind.

5. Anordnung nach Anspruch 4, **dadurch gekennzeichnet, dass** vertikale Ebenen, die durch die Schwerter (204, 205) und durch die Seitenträger (208, 209) des Zwischenspeichers definiert werden, einen Raum mit einem im Wesentlichen rechteckigen Querschnitt einschliessen.

6. Anordnung nach einem der Ansprüche 1 bis 5, **dadurch gekennzeichnet, dass** die Schwerter (104, 105; 204, 205; 504a, 504b, 505a, 505b) auf einer Innenseite Halteelemente (119; 219; 519) zum Halten der Gegenstände und/oder Sicherungselemente (118; 518) zur Sicherung der Gegenstände gegen horizontale Bewegungen relativ zur Greifvorrichtung und/oder Umkippen umfassen.

7. Anordnung nach einem der Ansprüche 1 bis 6, **dadurch gekennzeichnet, dass** der Zwischenspeicher (102; 202; 502a, 502b; 602) während der Aufnahme der Gegenstände ortsfest oberhalb des Lagerbereichs angeordnet ist.

8. Anordnung nach einem der Ansprüche 1 bis 7, **dadurch gekennzeichnet, dass** der Zwischenspeicher (102) an seinem oberen Ende ein vertikal verfahrbares Element (131) umfasst, welches zur Stabilisierung des gespeicherten Stapels auf den obersten gespeicherten Gegenstand eine Kraft nach unten ausübt.

9. Anordnung nach einem der Ansprüche 1 bis 8, **dadurch gekennzeichnet, dass** der Zwischenspeicher (102; 202) Halteelemente (130; 237) zum Halten der gespeicherten Gegenstände und/oder Sicherungselemente (120) zur Sicherung der Gegenstände gegen horizontale Bewegungen relativ zum Zwischenspeicher (102; 202) und/oder Umkippen umfasst.

10. Anordnung nach einem der Ansprüche 1 bis 9, **dadurch gekennzeichnet, dass** der Zwischenspeicher (102; 502a, 502b), vorzugsweise an seinem unteren Ende, einen Kalibrierteil (110; 510) umfasst, der eine Orientierung der Gegenstände beim Einführen in den Zwischenspeicher (102; 502a, 502b) korrigiert.

11. Anordnung nach Anspruch 10, **dadurch gekennzeichnet, dass** der Kalibrierteil (110) durch zwei C-förmige Justierelemente (111, 112) gebildet wird.

12. Anordnung nach einem der Ansprüche 1 bis 11, **dadurch gekennzeichnet, dass** die Sammelvorrichtung (501) mehrere Zwischenspeicher (502a, 502b) umfasst.

13. Anordnung nach einem der Ansprüche 1 bis 12, gekennteichnet durch eine Speichereinheit (649.1...649.6), welche unabhängig von der Sammelvorrichtung (601) bewegbar ist und welche derart ausgebildet ist, dass im Zwischenspeicher (602) der Sammelvorrichtung (601) aufgenommene Gegenstände direkt in die Speichereinheit (649.1...649.6) übergebbar sind.

14. Anordnung nach Anspruch 13, **dadurch gekennzeichnet, dass** die Speichereinheit (649.1...649.6) im Wesentlichen C-förmig ausgebildet ist mit einem rückwärtig angeordneten, vertikal verlaufenden Basisteil (650) und zwei am Basisteil (650) gehaltenen, mittig angeordneten, vorstehenden Halteteilen (651, 652), zwischen welchen die Gegenstände aufnehmbar sind.

15. Anordnung nach Anspruch 13 oder 14, **dadurch gekennzeichnet, dass** mehrere Speichereinheiten (649.1...649.6) an einer Portalbrücke (647) fest angeordnet sind und dass die Sammelvorrichtung (601) an einer weiteren Portalbrücke (641) verfahrbar angeordnet ist, wobei die Speichereinheiten (649.1...649.6) und die Sammelvorrichtung (601) einander gegenüber liegen.

16. Verfahren zur Bewirtschaftung eines Warenlagers, bei welchem in einem Lagerbereich Gegenstände in mehreren Stapeln gelagert sind, bei welchem
a) eine Sammelvorrichtung (101; 201; 401; 501; 601) über den Lagerbereich zu einem beliebigen Stapel mit aufzunehmenden Gegenständen verfahren wird;
b) eine an der Sammelvorrichtung (101; 201; 401; 501; 601) angeordnete Greifvorrichtung (103; 203; 403; 503a, 503b; 604, 605) zur Aufnahme eines Stapelteils aus einem oder mehreren Gegenständen des Stapels vertikal nach unten verfahren wird, indem zwei einander gegenüberliegenden Schwerter (104, 105; 204, 205; 404, 405; 504a, 504b, 505a, 505b; 604, 605) der Greifvorrichtung (103; 203; 403; 503a, 503b) aus der Sammelvorrichtung (101; 201; 401; 501; 601) ausgefahren werden, wobei ein an der Sammelvorrichtung (101; 201; 401; 501; 601) angeordneter Zwischenspeicher (102; 202; 402; 502a, 502b: 602) ortsfest bleibt;
c) der Stapelteil durch die einander gegenüberliegenden Schwerter (104, 105; 204, 205; 404, 405; 604, 605) der Greifvorrichtung (103; 203; 403; 503a, 503b) gefasst wird;
d) die Greifvorrichtung (103; 203; 403; 503a, 503b; 604, 605) vertikal nach oben verfahren wird, so dass der Zwischenspeicher (102; 202; 402; 502a, 502b; 602) die aus dem Lagerbereich aufgegriffenen Gegenstände aufnimmt; und
e) der Zwischenspeicher (102; 202; 402; 502a, 502b; 602) in weiteren Aufnahmeschritten aus verschiedenen Stapeln sukzessive gefüllt wird.

17. Verfahren nach Anspruch 16, **dadurch gekennzeichnet, dass** die Gegenstände im Zwischenspeicher (102) während des Verfahrens der Sammelvorrichtung (101) durch Sicherungselemente (120) des Zwischenspeichers (102) gegen horizontale Bewegungen relativ zur Sammelvorrichtung (101) und/oder Umkippen gesichert werden.

18. Verfahren nach Anspruch 16 oder 17, **dadurch gekennzeichnet, dass** die durch die Greifvorrichtung (103; 503a, 503b) gefassten Gegenstände beim Verfahren nach oben durch Sicherungselemente (118; 518) der Greifvorrichtung (103; 503a, 503b) gegen horizontale Bewegungen relativ zur Greifvorrichtung (103; 503a, 503b) und/oder Umkippen gesichert werden.

19. Verfahren nach einem der Ansprüche 16 bis 18, **dadurch gekennzeichnet, dass** zum Fassen des Stapelteils zwei einander gegenüberstehende Hälften der Sammelvorrichtung gegeneinander gefahren werden, bis die Schwerter den Stapelteil form- oder kraftschlüssig halten.

20. Verfahren nach einem der Ansprüche 16 bis 19, wobei die im Zwischenspeicher (602) aufgenommenen Gegenstände an eine von der Sammelvorrichtung (601) unabhängig bewegbare Speichereinheit (649.1...649.6) übergeben werden.

## Claims

1. Arrangement for running a warehouse, in which objects are stored in a plurality of stacks in a storage area, comprising
a) a collecting device (101; 201; 501; 601), which can be moved as desired over the storage area, in particular by a portal robot;
b) an intermediate store (102; 202; 502a, 502b; 602) arranged on the collecting device (101; 201; 501; 601) to accommodate objects to be picked up from the storage area, it being possible for the intermediate store (102; 202; 502a, 502b; 602) to be filled successively from various stacks in separate pick-up steps; and
c) a gripping device (103; 203; 503a, 503b) arranged on the collecting device (101; 201; 501; 601) for lifting one or more objects from one of the stacks, it being possible for the gripping device (103; 203; 503a, 503b) to be moved vertically;
**characterized in that**
d) the gripping device (103; 203; 503a, 503b) is substantially formed by two mutually opposite blades (104, 105; 204, 205; 504a, 504b, 505a, 505b; 604, 605), it being possible for the blades (104, 105; 204, 205; 504a, 504b, 505a, 505b; 604, 605) to be moved vertically with respect to the intermediate store (102; 202; 502a, 502b; 602).

2. Arrangement according to Claim 1, **characterized in that** the collecting device (101; 201; 601) is divided into two mutually opposite halves which can be moved relative to each other.

3. Arrangement according to Claim 1 or 2, **characterized in that** the intermediate store (102; 502a, 502b; 602) is substantially formed by two mutually opposite side beams (108, 109; 508, 509; 608, 609).

4. Arrangement according to Claim 3, **characterized in that** the blades (104, 105; 504a, 504b, 505a, 505b; 604, 605) of the gripping device (103; 503a, 503b) are mounted in the side beams (108, 109; 508, 509; 608, 609) of the intermediate store (102; 502a, 502b; 602) such that they can be moved vertically.

5. Arrangement according to Claim 4, **characterized in that** vertical planes which are defined by the blades (204, 205) and by the side beams (208, 209) of the intermediate store enclose a space with a substantially rectangular cross section.

6. Arrangement according to one of Claims 1 to 5, **characterized in that** the blades (104, 105; 204, 205; 504a, 504b, 505a, 505b) comprise on an inner side holding elements (119; 219; 519) for holding the objects and/or securing elements (118; 518) for securing the objects against horizontal movements relative to the gripping device and/or tilting.

7. Arrangement according to one of Claims 1 to 6, **characterized in that** the intermediate store (102; 202; 502a, 502b; 602) is arranged in a fixed location above the storage area as the objects are picked up.

8. Arrangement according to one of Claims 1 to 7, **characterized in that** the intermediate store (102) comprises at its upper end a vertically movable element (131) which exerts a force downward on the topmost stored object in order to stabilize the stored stack.

9. Arrangement according to one of Claims 1 to 8, **characterized in that** the intermediate store (102; 202) comprises holding elements (130; 237) for holding the stored objects and/or securing elements (120) for securing the objects against horizontal movements relative to the intermediate store (102; 202) and/or tilting.

10. Arrangement according to one of Claims 1 to 9, **characterized in that** the intermediate store (102; 502a, 502b) comprises, preferably at its lower end, a calibration part (110; 510) which corrects an orientation of the objects as they are inserted into the intermediate store (102; 502a, 502b).

11. Arrangement according to Claim 10, **characterized in that** the calibration part (110) is formed by two C-shaped adjusting elements (111, 112).

12. Arrangement according to one of Claims 1 to 11, **characterized in that** the collecting device (501) comprises a plurality of intermediate stores (502a, 502b).

13. Arrangement according to one of Claims 1 to 12, **characterized by** a storage unit (649.1...649.6), which can be moved independently of the collecting device (601) and which is constructed in such a way that objects accommodated in the intermediate store (602) of the collecting device (601) can be transferred directly into the storage unit (649.1...649.6).

14. Arrangement according to Claim 13, **characterized in that** the storage unit (649.1...649.6) is substantially C-shaped with a base part (650) running vertically and arranged at the rear, and two holding parts (651, 652) held on the base part (650), arranged centrally and projecting forward, between which the objects can be picked up.

15. Arrangement according to Claim 13 or 14, **characterized in that** a plurality of storage units (649.1...649.6) are fixedly arranged on a portal bridge (647), and **in that** the collecting device (601) is arranged such that it can be moved on a further portal bridge (641), the storage units (649.1...649.6) and the collecting device (601) being located opposite each other.

16. Method for operating a warehouse, in which objects are stored in a plurality of stacks in a storage area, in which
a) a collecting device (101; 201; 401; 501; 601) is moved over the storage area to any desired stack having objects to be picked up;
b) a gripping device (103; 203; 403; 503a, 503b; 604, 605) arranged on the collecting device (101; 201; 401; 501; 601) for picking up a stack part from one or more objects of the stack is moved vertically downward, by virtue of two mutually opposite blades (104, 105; 204, 205; 404, 405; 504a, 504b, 505a, 505b; 604, 605) of the gripping device (103; 203; 403; 503a, 503b) being extended out of the collecting device (101; 201; 401; 501; 601), an intermediate store (102; 202; 402; 502a, 502b; 602) arranged on the collecting device (101; 201; 401; 501; 601) remaining in a fixed location;
c) the stack part is gripped by the mutually opposite blades (104, 105; 204, 205; 404, 405; 604, 605) of the gripping device (103; 203; 403; 503a, 503b);
d) the gripping device (103; 203; 403; 503a, 503b; 604, 605) is moved vertically upward, so that the intermediate store (102; 202; 402; 502a, 502b; 602) accommodates the objects picked up from the storage area; and
e) the intermediate store (102; 202; 402; 502a, 502b; 602) is filled successively from various stacks in further pick-up steps.

17. Method according to Claim 16, **characterized in that**, during the movement of the collecting device (101), the objects in the intermediate store (102) are secured against horizontal movements relative to the collecting device (101) and/or tilting by securing elements (120) of the intermediate store (102).

18. Method according to Claim 16 or 17, **characterized in that** the objects gripped by the gripping device (103; 503a, 503b), as they move upward, are secured against horizontal movements relative to the gripping device (103; 503a, 503b) and/or tilting by securing elements (118; 518) of the gripping device (103; 503a, 503b).

19. Method according to one of Claims 16 to 18, **characterized in that**, in order to grip the stack part, two mutually opposite halves of the collecting device are moved toward each other until the blades hold the stack part with a form or force fit.

20. Method according to one of Claims 16 to 19, the objects accommodated in the intermediate store (602) being transferred to a storage unit (649.1...649.6) which can be moved independently of the collecting device (601).

## Revendications

1. Système d'exploitation d'un entrepôt, dans lequel, dans une zone de stockage, des objets sont stockés en plusieurs piles, comprenant :
a) un dispositif de collecte (101 ; 201 ; 501 ; 601), qui peut être déplacé de manière quelconque sur la zone de stockage par le biais d'un robot portique,
b) un accumulateur intermédiaire (102 ; 202 ; 502a, 502b ; 602) disposé sur le dispositif de collecte (101 ; 201 ; 501 ; 601) pour recevoir des objets à saisir depuis la zone de stockage, l'accumulateur intermédiaire (102 ; 202 ; 502a, 502b ; 602) pouvant être rempli de manière successive par étapes de réception séparées à partir de différentes piles ; et
c) un dispositif de préhension (103 ; 203 ; 503a, 503b) disposé sur le dispositif de collecte (101 ; 201 ; 501 ; 601) pour soulever un ou plusieurs objets à partir de l'une des piles, le dispositif de préhension (103 ; 203 ; 503a, 503b) pouvant être déplacé verticalement ;
**caractérisé en ce que**
d) le dispositif de préhension (103 ; 203 ; 503a, 503b) est formé essentiellement par deux branches opposées (104, 105 ; 204, 205 ; 504a, 504b, 505a, 505b ; 604, 605), les branches (104, 105 ; 204, 205 ; 504a, 504b, 505a, 505b ; 604, 605) pouvant être déplacées verticalement par rapport à l'accumulateur intermédiaire (102 ; 202 ; 502a, 502b ; 602).

2. Système selon la revendication 1, **caractérisé en ce que** le dispositif de collecte (101 ; 201 ; 601) est divisé en deux moitiés opposées qui peuvent être déplacées l'une par rapport à l'autre.

3. Système selon la revendication 1 ou 2, **caractérisé en ce que** l'accumulateur intermédiaire (102 ; 502a, 502b ; 602) est formé essentiellement par deux supports latéraux (108, 109 ; 508, 509 ; 608, 609) opposés.

4. Système selon la revendication 3, **caractérisé en ce que** les branches (104, 105 ; 504a, 504b, 505a, 505b ; 604, 605) du dispositif de préhension (103 ; 503a, 503b) sont montées de manière déplaçable verticalement dans les supports latéraux (108, 109 ; 508, 509 ; 608, 609) de l'accumulateur intermédiaire (102 ; 502a, 502b ; 602).

5. Système selon la revendication 4, **caractérisé en ce que** des plans verticaux, qui sont définis par les branches (204, 205) et par les supports latéraux (208, 209) de l'accumulateur intermédiaire, délimitent un espace de section transversale essentiellement rectangulaire.

6. Système selon l'une quelconque des revendications 1 à 5, **caractérisé en ce que** les branches (104, 105 ; 204, 205 ; 504a, 504b, 505a, 505b) comprennent, sur un côté intérieur, des éléments de retenue (119 ; 219 ; 519) pour retenir les objets et/ou des éléments de fixation (118 ; 518) pour la fixation des objets contre tout mouvement horizontal par rapport au dispositif de préhension et/ou pour les empêcher de basculer.

7. Système selon l'une quelconque des revendications 1 à 6, **caractérisé en ce que** l'accumulateur intermédiaire (102 ; 202 ; 502a, 502b ; 602) est disposé fixement au-dessus de la zone de stockage pendant la réception des objets.

8. Système selon l'une quelconque des revendications 1 à 7, **caractérisé en ce que** l'accumulateur intermédiaire (102) comprend à son extrémité supérieure un élément déplaçable verticalement (131) qui exerce sur l'objet stocké le plus en haut une force vers le bas pour stabiliser la pile stockée.

9. Système selon l'une quelconque des revendications 1 à 8, **caractérisé en ce que** l'accumulateur intermédiaire (102 ; 202) comprend des éléments de retenue (130 ; 237) pour retenir les objets stockés et/ou des éléments de fixation (120) pour la fixation des objets contre tout mouvement horizontal par rapport à l'accumulateur intermédiaire (102 ; 202) et/ou pour les empêcher de basculer.

10. Système selon l'une quelconque des revendications 1 à 9, **caractérisé en ce que** l'accumulateur intermédiaire (102 ; 502a, 502b), de préférence à son extrémité inférieure, comprend une pièce de calibrage (110 ; 510) qui corrige une orientation des objets lors de leur introduction dans l'accumulateur intermédiaire (102 ; 502a, 502b).

11. Système selon la revendication 10, **caractérisé en ce que** la pièce de calibrage (110) est formée par deux éléments d'ajustage en forme de C (111, 112).

12. Système selon l'une quelconque des revendications 1 à 11, **caractérisé en ce que** le dispositif de collecte (501) comprend plusieurs accumulateurs intermédiaires (502a, 502b).

13. Système selon l'une quelconque des revendications 1 à 12, **caractérisé par** une unité d'accumulateur (649.1...649.6), qui peut être déplacée indépendamment du dispositif de collecte (601) et qui est réalisée de telle sorte que les objets reçus dans l'accumulateur intermédiaire (602) du dispositif de collecte (601) puissent être transférés directement dans l'unité d'accumulateur (649.1...649.6).

14. Système selon la revendication 13, **caractérisé en ce que** l'unité d'accumulateur (649.1...649.6) est réalisée essentiellement en forme de C et avec une partie de base (650) disposée vers l'arrière, s'étendant verticalement, et deux parties de retenue saillantes (651, 652), disposées centralement et retenues sur la partie de base (650), entre lesquelles peuvent être reçus les objets.

15. Système selon la revendication 13 ou 14, **caractérisé en ce que** plusieurs unités d'accumulateur (649.1...649.6) sont disposées fixement sur un pont portique (647) et **en ce que** le dispositif de collecte (601) est disposé de manière déplaçable sur un autre pont portique (641), les unités d'accumulateur (649.1...649.6) et le dispositif de collecte (601) étant mutuellement opposés.

16. Procédé d'exploitation d'un entrepôt, dans lequel, dans une zone de stockage sont stockés des objets en plusieurs piles, dans lequel :
a) un dispositif de collecte (101 ; 201 ; 401 ; 501 ; 601) est déplacé sur la zone de stockage jusqu'à une pile quelconque avec des objets à recevoir ;
b) un dispositif de préhension (103 ; 203 ; 403 ; 503a, 503b ; 604, 605), disposé sur le dispositif de collecte (101 ; 201 ; 401 ; 501 ; 601) pour recevoir une partie de la pile constituée d'un ou plusieurs objets de la pile, est déplacé verticalement vers le bas, deux branches opposées (104, 105 ; 204, 205 ; 404, 405 ; 504a, 504b, 505a, 505b ; 604, 605) du dispositif de préhension (103 ; 203 ; 403 ; 503a, 503b) étant sorties du dispositif de collecte (101 ; 201 ; 401 ; 501 ; 601), un accumulateur intermédiaire (102 ; 202 ; 402 ; 502a, 502b ; 602) disposé sur le dispositif de collecte (101 ; 201 ; 401 ; 501 ; 601) restant fixé en place ;
c) la partie de la pile est saisie par les branches opposées (104, 105 ; 204, 205 ; 404, 405 ; 604, 605) du dispositif de préhension (103 ; 203 ; 403 ; 503a, 503b) ;
d) le dispositif de préhension (103 ; 203 ; 403 ; 503a, 503b ; 604, 605) est déplacé verticalement vers le haut de telle sorte que l'accumulateur intermédiaire (102 ; 202 ; 402 ; 502a, 502b ; 602) reçoive les objets saisis à partir de la zone de stockage ; et
e) l'accumulateur intermédiaire (102 ; 202 ; 402 ; 502a, 502b ; 602) est successivement rempli dans des étapes supplémentaires de réception à partir de différentes piles.

17. Procédé selon la revendication 16, **caractérisé en ce que** les objets dans l'accumulateur intermédiaire (102) pendant le déplacement du dispositif de collecte (101) sont fixés par des éléments de fixation (120) de l'accumulateur intermédiaire (102) contre tout mouvement horizontal par rapport au dispositif de collecte (101) et/ou pour les empêcher de basculer.

18. Procédé selon la revendication 16 ou 17, **caractérisé en ce que** les objets saisis par le dispositif de préhension (103 ; 503a, 503b), lors du déplacement vers le haut, sont fixés par des éléments de fixation (118 ; 518) du dispositif de préhension (103 ; 503a, 503b) contre tout mouvement horizontal par rapport au dispositif de préhension (103 ; 503a, 503b) et/ou pour les empêcher de basculer.

19. Procédé selon l'une quelconque des revendications 16 à 18, **caractérisé en ce que** pour saisir la partie de la pile, deux moitiés opposées du dispositif de collecte sont déplacées l'une par rapport à l'autre jusqu'à ce que les branches retiennent la partie de la pile par engagement par correspondance géométrique ou par force.

20. Procédé selon l'une quelconque des revendications 16 à 19, dans lequel les objets reçus dans l'accumulateur intermédiaire (602) sont transférés à une unité d'accumulateur (649.1...649.6) déplaçable indépendamment du dispositif de collecte (601).
